# FASCICULE DE BREVET EUROPEEN

(11) **EP 4 004 376 B1**
(45) Date de publication et mention de la délivrance du brevet: **28.06.2023**
(21) Numéro de dépôt: 20754000.6
(22) Date de dépôt: 20.07.2020
(51) Int. Cl.: F04D 17/10, F04D 29/70, F25J 3/06

(54) **APPAREIL DE COMPRESSION ET DE SEPARATION ET PROCEDE DE COMPRESSION**
KOMPRESSIONS- UND TRENNVORRICHTUNG UND KOMPRESSIONSVERFAHREN
COMPRESSION AND SEPARATION DEVICE AND COMPRESSION PROCESS

(30) Priorité: 24.07.2019 FR 1908371; 14.10.2019 FR 1911369; 27.11.2019 FR 1913329
(43) Date de publication de la demande: 01.06.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LE BOT, Patrick, 94503 Champigny Sur Marne (FR)
(74) Mandataire: Air Liquide
(86) Numéro de dépôt international: PCT/FR2020/051310
(87) Numéro de publication internationale: WO 2021/014086

(56) Documents cités:
- JP-A- H0 275 882
- US-A- 3 551 106
- US-A- 3 992 167
- US-A1- 2012 121 497

## Description

La présente invention est relative à un appareil de compression et de séparation en particulier d'hydrogène gazeux et à un procédé de compression en particulier d'hydrogène gazeux.

L'hydrogène est un gaz à poids moléculaire très faible. Les compresseurs d'hydrogène utilisés sont donc majoritairement de type volumétriques, et ne sont pas des compresseurs dynamiques.

Pour la compression de grands débits volumiques d'hydrogène, ce qui est requis pour les liquéfacteurs d'hydrogène de grande capacité, la compression volumétrique est problématique car elle nécessite une multitude de compresseurs en parallèle. En effet, la capacité volumique de tels compresseurs et limitée.

Les compresseurs dynamiques (par exemple centrifuges) ont des capacités volumiques beaucoup plus grandes et seraient mieux adaptés à la compression des grands débits volumiques souhaités. Mais pour atteindre un rapport de pression élevé, un grand nombre d'étages de compression en série est requis.

La compression d'hydrogène (masse molaire 2 g/mol) entre 6 et 25 bars par un compresseur centrifuge mono-arbre nécessite 8 étages de compression en série. A titre de comparaison, la compression d'un gaz de l'air (azote par exemple, masse molaire 28 g/mol) demandera 3 étages pour effecteur le même rapport de compression.

Il est possible de comprimer un gaz léger tel que l'hydrogène en augmentant la masse molaire du gaz à comprimer par mélange avec un gaz plus lourd. Mais alors ce gaz ballast comprimé de bout en bout avec l'hydrogène augmente considérablement la puissance requise pour comprimer la même quantité d'hydrogène.

Par exemple, on peut mélanger l'hydrogène (2g/mol) avec du CO₂ (44 g/mol). Un mélange 60% CO₂ + 40% H₂ aura une masse molaire similaire à celle de l'azote et donc nécessitera aussi 3 étages de compression pour le même.

Mais alors la consommation sera 1/0.4 = 2.5 fois plus grande par rapport à une compression sans ajout de gaz ballast.

L'utilisation de composés encore plus lourds que le CO₂, tels que les Fréons ^{®} par exemple, sont également connus de US3992167A ou JPH0275882A. De tels composés sont comprimés entièrement avec le gaz léger depuis la pression d'aspiration jusqu'au refoulement du dernier étage, mais leur poids moléculaire élevé minimise la quantité à ajouter et donc le surcout énergétique.

L'invention proposée permet l'utilisation d'un compresseur dynamique pour comprimer de l'hydrogène tout en minimisant la perte énergétique associée à l'utilisation d'un gaz lourd.

Selon un objet de l'invention, il est prévu un appareil de compression et de séparation comprenant un compresseur dynamique ayant un premier et un deuxième étages de compression pour comprimer un premier gaz ayant un premier poids moléculaire inférieur à 10 g/mol, voire à 7.5 g/mol ou même à 5 g/mol comprenant :
i.Une entrée du premier gaz,
ii.Des moyens pour mélanger au moins un deuxième fluide ayant un deuxième poids moléculaire supérieure à 50 g/mol avec le premier gaz pour former un troisième gaz à comprimer à poids moléculaire supérieur à 10 g/mol,
iii.Des moyens pour envoyer le troisième gaz au premier étage de compression, un premier échangeur de chaleur pour refroidir le troisième gaz en aval du premier étage de compression afin de le condenser partiellement, un premier séparateur de phases, des moyens pour envoyer le troisième gaz partiellement condensé au premier séparateur de phases pour former un quatrième gaz ayant un poids moléculaire inférieur à celui du troisième gaz et un premier liquide condensé ayant un poids moléculaire supérieur à celui du troisième gaz,
iv.Des moyens pour envoyer le quatrième gaz du premier séparateur de phases au deuxième étage de compression, un deuxième échangeur de chaleur en aval du deuxième étage de compression , des moyens pour envoyer le quatrième gaz comprimé dans le deuxième étage de compression et le refroidir dans le deuxième échangeur de chaleur afin de le condenser partiellement, un deuxième séparateur de phases et des moyens pour envoyer le quatrième gaz partiellement condensé au deuxième séparateur de phases pour produire un cinquième gaz ayant un poids moléculaire inférieur à celui du quatrième gaz et un deuxième liquide condensé ayant un poids moléculaire supérieur à celui du quatrième gaz, et
v.Un appareil de séparation, des moyens pour envoyer le cinquième gaz ou un gaz dérivé du cinquième gaz à l'appareil de séparation pour s'y séparer pour produire un produit gazeux ayant un poids moléculaire inférieur à 10 g/mol, voire à 7.5 g/mol ou même à 5 g/mol et une composition inférieure à 10ppm, voire à 5ppm, ou même à 1 ppm de tout constituant ayant un poids moléculaire supérieur à 50 g/mol.

Selon d'autres aspects facultatifs :
- l'appareil comprend des moyens pour récupérer le premier liquide condensé et/ou le deuxième liquide condensé, ces moyens comprenant éventuellement un réservoir commun, et des moyens pour mélanger le premier et/ou le deuxième liquide condensé au premier gaz éventuellement après vaporisation.
- l'appareil comprend des moyens pour vaporiser au moins une partie du premier et/ou du deuxième liquide condensé et des moyens pour recycler au moins une partie de la partie vaporisée comme deuxième fluide.
- l'appareil comprend des moyens pour utiliser une partie de la chaleur générée par la compression pour vaporiser le premier et/ou le deuxième liquide condensé.
- le premier et/ou le deuxième séparateur de phases n'est pas isolé thermiquement de l'ambiant.

Selon un autre objet de l'invention il est prévu un procédé de compression dans un compresseur dynamique ayant au moins un premier et un deuxième étages de compression dans lequel on comprime un premier gaz ayant un premier poids moléculaire inférieur à 10 g/mol , voire à 7.5 g/mol ou même à 5 g/mol, on mélange au moins un deuxième fluide ayant un deuxième poids moléculaire supérieure à 50 g/mol avec le premier gaz pour former un troisième gaz à comprimer à poids moléculaire supérieur à 10 g/mol, on envoie le troisième gaz au premier étage de compression, on refroidit le troisième gaz dans un premier échangeur de chaleur en aval du premier étage de compression où on le condense partiellement, on envoie le troisième gaz partiellement condensé à un premier séparateur de phases opérant à une température supérieure à -50°C pour former un quatrième gaz ayant un poids moléculaire inférieur à celui du troisième gaz et un premier liquide condensé ayant un poids moléculaire supérieur à celui du troisième gaz, on envoie le quatrième gaz du premier séparateur de phases au deuxième étage de compression, on envoie le quatrième gaz comprimé dans le deuxième étage de compression se refroidir dans un deuxième échangeur de chaleur où il se condense partiellement, on envoie le quatrième gaz partiellement condensé à un deuxième séparateur de phases opérant à une température supérieure à -50°C pour produire un cinquième gaz ayant un poids moléculaire inférieur à celui du quatrième gaz et un deuxième liquide condensé ayant un poids moléculaire supérieur à celui du quatrième gaz.

Un gaz peut être dérivé d'un autre gaz en séparant le gaz en deux parties de composition identiques, en le séparant par distillation, adsorption ou perméation. Selon d'autres aspects facultatifs :
- on récupère le premier liquide condensé et/ou le deuxième liquide condensé, éventuellement dans un réservoir commun, et on mélange le premier et/ou le deuxième liquide condensé au premier gaz éventuellement après vaporisation.
- on vaporise au moins une partie du premier et/ou du deuxième liquide condensé et on recycle au moins une partie de la partie vaporisée comme deuxième fluide.
- un procédé de compression et de séparation comprenant un procédé de compression tel que décrit ci-dessus, dans lequel on envoie le cinquième gaz ou un gaz dérivé du cinquième gaz à un appareil de séparation pour s'y séparer pour produire un produit gazeux ayant un poids moléculaire inférieur à 10 g/mol, voire à 7.5 g/mol ou même à 5 g/mol et une composition inférieure à 10 ppm, voire à 5ppm, ou même à 1 ppm de tout constituant ayant un poids moléculaire supérieur à 50 g/mol.
- l'appareil de séparation produit également un gaz ayant un poids moléculaire supérieur à 10 g/mol, voire à 7.5 g/mol ou même à 5 g/mol et une composition supérieure à 10ppm, voire à 5ppm, ou même à 1 ppm de tout constituant ayant un poids moléculaire supérieur à 50 g/mol et on envoie ce gaz en amont du compresseur pour y être comprimé avec le premier gaz.

On propose ici une compression multi étagée d'un gaz a bas poids moléculaire (< 10 g/mol ; 7.5 g/mol; 5 g/mol) caractérisée par :
- Mélange avant compression avec un constituant ou un mélange de constituants à haut poids moléculaire (>50 g/mol) pour former un gaz à comprimer à poids moléculaire > 10 g/mol.
- Compression multi étagée de ce gaz dans un compresseur dynamique comprenant au moins une étape de réfrigération intermédiaire.
- Formation d'une phase condensée riche en constituants à haut poids moléculaire et d'une phase gazeuse appauvrie en constituants à haut poids moléculaire lors de l'étape refroidissement intermédiaire.
- Récupération des condensats et compression dans l'étage suivant de la phase vapeur enrichie en composant à bas poids moléculaire.
- Mutualisation des condensats et recyclage en amont du compresseur.
- En sortie du dernier étage de compression et après refroidissement finale et condensation, la phase gaz est envoyée dans une unité de séparation dans laquelle :
- Le gaz à bas poids moléculaire est produit sous pression et avec une teneur en constituants à haut poids moléculaire < 10 ppm (<5 ppm ; <1 ppm).
- Les constituants à haut poids moléculaire sont récupérés et recyclés en amont du compresseur.

Avec un choix judicieux du (des) composants(s) à haut poids moléculaire ajouté, en fonction des conditions opératoire du compresseurs (R_{entrée}, Pₛₒᵣₜᵢₑ), etc... la perte énergétique est très significativement minorée par rapport à l'état de l'art. Exemple : Compression d'hydrogène de 1 à 25 bars en 8 étages, la pénalité est réduite à +26% en incorporant du CH₂Cl₂, à comparer avec +150% avec le cycle CO₂ (incondensable).

Pour comprimer 100 000 Nm³/h d'hydrogène de 6 bars à environ 51 bars, la valeur de pression finale peut être calculé en prenant des hypothèses identiques sont pris pour tous les étages de compression, à savoir :
- Rendement adiabatique de compression = 85%
- Perte de charge entre chaque étage de compression = 0.1 bars
- Hauteur polytropique de compression : 100 kJ/kg
- Température de recondensation : 40°C.

On voit que par rapport à une compression dans un compresseur volumique à l'état de l'art :
- Un compresseur centrifuge d'hydrogène pur aurait un très grand nombre d'étages (environ 35) et donc serait très cher et très encombrant.
- Alourdir avec un deuxième fluide incondensable qui est du CO₂ à 44 g/mol pour former un mélange à 12 g/mol permet de comprimer en cinq étages mais est fortement pénalisé en énergie.
- Alourdir avec un deuxième fluide pour obtenir un mélange à 12 g/mol (en entrée d'étage de compression) qui se condense partiellement selon l'invention permet de minimiser la perte énergétique, tout en restant dans un nombre d'étages de compression raisonnable.
- Alourdir avec un deuxième fluide pour former un mélange à 17g/mol (en entrée d'étage) qui se condense partiellement selon l'invention permet de comprimer dans le même nombre d'étage qu'avec le mélange au CO₂ à 12g/mol, et minimise aussi la perte énergétique.

Le premier tableau correspond au cas où le rendement de la séparation H₂ / autre est de 100% et un où ce rendement chute à 80%. On constate simplement que la consommation d'énergie des solutions " à mélange" est pénalisée de ce rendement. (ici 1/0.8 =125%).

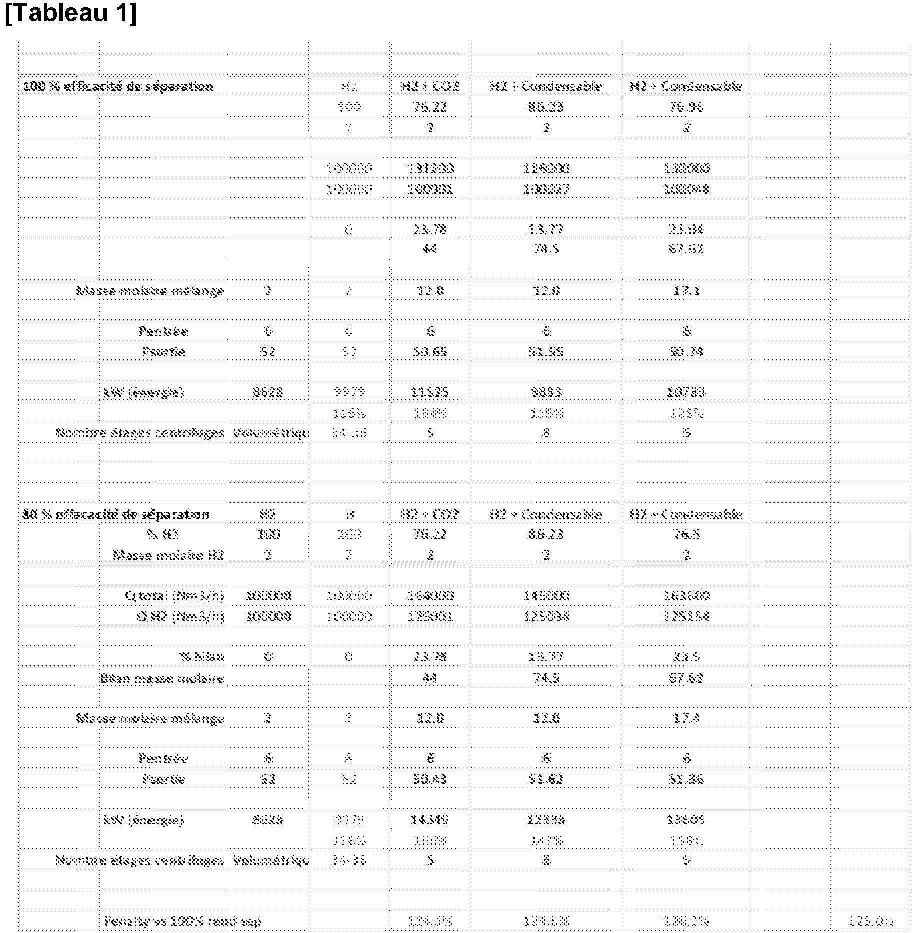

L'invention sera décrite de manière plus détaillée en se référant aux figures.
**[****Fig.1****]** représente un procédé selon l'invention.
**[****Fig.2****]** représente un procédé selon l'invention.

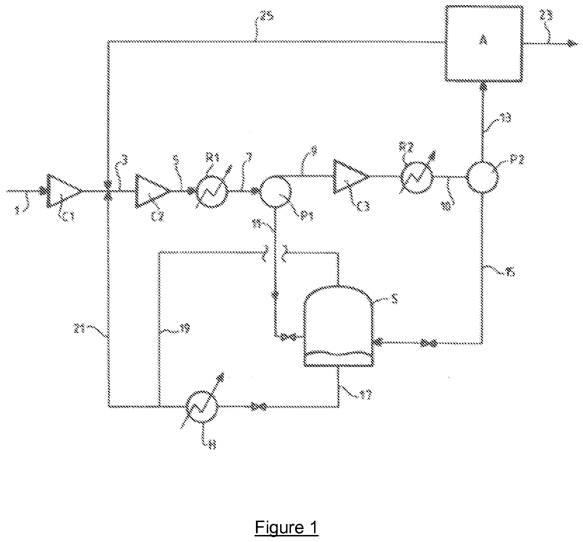

Dans la Figure 1, un premier gaz ayant un premier poids moléculaire inférieur à 10 g/mol, voire à 7.5 g/mol ou même à 5 g/mol, par exemple de l'hydrogène ou de l'hélium, 1 est comprimé dans une étage de compresseur C1. Après avoir été mélangé avec un gaz 21 ayant un deuxième poids moléculaire qui est supérieur à 50g/mol et éventuellement avec un gaz 25 ayant également un deuxième poids moléculaire qui est supérieur à 50g/mol, il forme un mélange gazeux ayant un troisième poids moléculaire qui est supérieur à 10g/mol. Le gaz 21 peut par exemple être du dichlorométhane (CH₂Cl₂).

Le gaz 21 peut être remplacé par un liquide. Dans ce cas, le liquide 21 est injecté dans le premier gaz sous forme d'aérosol.

Le premier gaz a un premier composant principal et le deuxième fluide a éventuellement un deuxième composant principal, dans chaque cas le composant principal comprend de préférence 50% mol, voire 80% mol, voire 90 % mol, voire 95% mol du gaz.

Il peut éventuellement être mélangé aussi avec un gaz 25. Le mélange 3 ayant un poids moléculaire supérieur à 10g/mol, voire à 15 g/mol est comprimé dans une étage de compresseur dynamique C2 pour former un gaz comprimé 5, le gaz comprimé est refroidi dans un refroidisseur R1 pour le condenser partiellement. Le débit partiellement condensé 7 est séparé dans un séparateur de phases P1. Le gaz 9 du séparateur de phases P1, enrichi en le premier composant principal et éventuellement appauvri en le deuxième composant principal, est comprimé dans une étage de compresseur dynamique C3 et refroidi par un refroidisseur R2 pour une nouvelle étape de condensation partielle. Le débit partiellement condensé 10 est séparé dans un séparateur de phases P2.

Le gaz 13 du séparateur de phases P2, enrichi en le premier composant principal et éventuellement appauvri en le deuxième composant principal, est séparé pour produire un gaz produit 23 ayant la même composant principal que le premier gaz, pouvant être aussi pur en ce composant que le premier gaz, plus pur en ce composant que le premier gaz ou moins pur en ce composant que le premier gaz. Le gaz 23 est enrichi en le premier composant principal et éventuellement appauvri en le deuxième composant principal par rapport au gaz 13 et par rapport au gaz 10. Le premier gaz 1 et le gaz produit 23 contiennent au moins 80% mol d'un premier composant, voire au moins 90% mol, voire au moins 95% mol.

Le gaz produit 23 et de préférence le gaz 13, voire le gaz 10, a un poids moléculaire inférieur à 10 g/mol, voire à 7.5 g/mol ou même à 5 g/mol.

La séparation du gaz 23 dans l'appareil 1 peut être effectuée par tout moyen adapté, dont la distillation, l'absorption, l'adsorption, la perméation, le lavage ou une combinaison de plusieurs de ces techniques.

Le gaz 25 produit par l'appareil 1 contient un mélange du premier gaz et du deuxième fluide et peut être recyclé en amont de l'étage de compression C2 pour ne perdre aucun des deux fluides.

Quels que soient les gaz mélangés avec le gaz 1, l'essentiel est que le mélange 3 rentrant dans l'étage de compression C2 ait un poids moléculaire plus élevé que celui du gaz 1.

Le liquide 15 du séparateur de phases P2 enrichi en le deuxième composant principal et appauvri en le premier composant principal par rapport au gaz 10 est détendu et envoyé à un stockage S. Ce stockage recueille également le liquide détendu 11 du premier séparateur de phases P1 qui est enrichi en le deuxième composant principal et appauvri en le premier composant principal par rapport au gaz 7.

Les deux séparateurs de phases P1, P2 opèrent à des températures au-dessus de -50°C, voire au-dessus de -20°C, voire au-dessus de 0°C, voire au-dessus de l'ambiant. Selon la température d'opération, ils peuvent se trouver à l'air libre sans isolation.

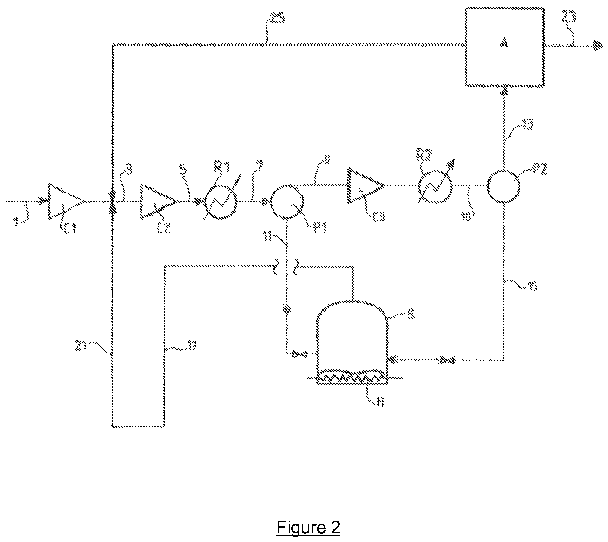

Le liquide 17 du stockage est détendu, réchauffé par le réchauffeur H pour le vaporiser et envoyé en tant que gaz 21 modifier le poids moléculaire du gaz 1. Le gaz de tête du stockage 19 peut également être mélangé en aval du réchauffeur H. Une autre possibilité, montrée dans la [Fig. 2], est d'incorporer le réchauffeur H dans le stockage S pour vaporiser les liquides 11,15 accumulés dans le stockage S, de sorte que seul le gaz 19 est recyclé comme gaz 21 mélangé au gaz 1.

De préférence, au moins une partie de la chaleur de compression du premier gaz 1 est récupérée pour réchauffer le ou les liquides 11,15. Ainsi le réchauffeur H et les refroidisseurs R1 et/ou R2 peuvent être reliés entre eux ou même former partie d'un seul échangeur de chaleur.

Les étages C2, C3 ou même C1 sont des étages de compression dynamique, voire centrifuges.

De préférence, le stockage S des deux figures opère à des températures au-dessus de -50°C, voire au-dessus de -20°C, voire au-dessus de 0°C, voire au-dessus de l'ambiant. Selon la température d'opération, il peut se trouver à l'air libre sans isolation.

## Revendications

1. Appareil de compression et de séparation comprenant un compresseur dynamique ayant un premier et un deuxième étages de compression (C2, C3) pour comprimer un premier gaz (1) ayant un premier poids moléculaire inférieur à 10 g/mol, voire à 7.5 g/mol ou même à 5 g/mol comprenant :
i.Une entrée du premier gaz,
ii.Des moyens pour mélanger au moins un deuxième fluide (21) ayant un deuxième poids moléculaire supérieure à 50 g/mol avec le premier gaz pour former un troisième gaz à comprimer (3) à poids moléculaire supérieur à 10 g/mol,
iii.Des moyens pour envoyer le troisième gaz au premier étage de compression (C2), un premier échangeur de chaleur (R1) pour refroidir le troisième gaz en aval du premier étage de compression afin de le condenser partiellement, un premier séparateur de phases (P1), des moyens pour envoyer le troisième gaz partiellement condensé au premier séparateur de phases pour former un quatrième gaz (9) ayant un poids moléculaire inférieur à celui du troisième gaz et un premier liquide condensé (11) ayant un poids moléculaire supérieur à celui du troisième gaz,
iv.Des moyens pour envoyer le quatrième gaz du premier séparateur de phases au deuxième étage de compression (C3) , un deuxième échangeur de chaleur (R2) en aval du deuxième étage de compression , des moyens pour envoyer le quatrième gaz comprimé dans le deuxième étage de compression et le refroidir dans le deuxième échangeur de chaleur afin de le condenser partiellement, un deuxième séparateur de phases (P2) et des moyens pour envoyer le quatrième gaz partiellement condensé au deuxième séparateur de phases pour produire un cinquième gaz (13) ayant un poids moléculaire inférieur à celui du quatrième gaz et un deuxième liquide (15) condensé ayant un poids moléculaire supérieur à celui du quatrième gaz, et
v.Un appareil de séparation et des moyens pour envoyer le cinquième gaz ou un gaz dérivé du cinquième gaz à l'appareil de séparation (A) pour s'y séparer pour produire un produit gazeux (23) ayant un poids moléculaire inférieur à 10 g/mol, voire à 7.5 g/mol ou même à 5 g/mol et une composition inférieure à 10ppm, voire à 5ppm, ou même à 1 ppm de tout constituant ayant un poids moléculaire supérieur à 50 g/mol.

2. Appareil selon la revendication 1 comprenant des moyens pour récupérer le premier liquide condensé (11) et/ou le deuxième liquide condensé (15), ces moyens comprenant éventuellement un réservoir commun (S), et des moyens pour mélanger le premier et/ou le deuxième liquide condensé au premier gaz éventuellement après vaporisation.

3. Appareil selon la revendication 2 comprenant des moyens (H) pour vaporiser au moins une partie du premier et/ou du deuxième liquide condensé (11, 15) et des moyens pour recycler au moins une partie de la partie vaporisée comme deuxième fluide.

4. Appareil selon l'une des revendications précédentes comprenant des moyens (H, R1, R2) pour utiliser une partie de la chaleur générée par la compression (C2, C3) pour vaporiser le premier et/ou le deuxième liquide condensé.

5. Appareil selon l'une des revendications précédentes dans lequel le premier et/ou le deuxième séparateur de phases (P1, P2) n'est pas isolé thermiquement de l'ambiant.

6. Procédé de compression dans un compresseur dynamique ayant au moins un premier et un deuxième étages de compression (C2,C3) dans lequel on comprime un premier gaz (1) ayant un premier poids moléculaire inférieur à 10 g/mol , voire à 7.5 g/mol ou même à 5 g/mol, on mélange au moins un deuxième fluide (19,21) ayant un deuxième poids moléculaire supérieure à 50 g/mol avec le premier gaz pour former un troisième gaz à comprimer (3) à poids moléculaire supérieur à 10 g/mol, on envoie le troisième gaz au premier étage de compression (C2), on refroidit le troisième gaz dans un premier échangeur de chaleur (R1) en aval du premier étage de compression où on le condense partiellement, on envoie le troisième gaz partiellement condensé à un premier séparateur de phases (P1) opérant à une température supérieure à -50°C pour former un quatrième gaz ayant un poids moléculaire inférieur à celui du troisième gaz (9) et un premier liquide condensé (11) ayant un poids moléculaire supérieur à celui du troisième gaz, on envoie le quatrième gaz du premier séparateur de phases au deuxième étage de compression (C3), on envoie le quatrième gaz comprimé dans le deuxième étage de compression se refroidir dans un deuxième échangeur de chaleur (R2) où il se condense partiellement, on envoie le quatrième gaz partiellement condensé à un deuxième séparateur de phases (P2) opérant à une température supérieure à -50°C pour produire un cinquième gaz (13) ayant un poids moléculaire inférieur à celui du quatrième gaz et un deuxième liquide condensé (15) ayant un poids moléculaire supérieur à celui du quatrième gaz.

7. Procédé selon la revendication 6 dans lequel on récupère le premier liquide condensé et/ou le deuxième liquide condensé (11,15), éventuellement dans un réservoir commun (S), et on mélange le premier et/ou le deuxième liquide condensé au premier gaz (1) éventuellement après vaporisation.

8. Procédé selon la revendication 7 dans lequel on vaporise au moins une partie du premier et/ou du deuxième liquide condensé (11,15) et on recycle au moins une partie de la partie vaporisée (19) comme deuxième fluide.

9. Procédé selon l'une des revendications 6 à 8 dans lequel le premier gaz est de l'hydrogène.

10. Procédé de compression et de séparation comprenant un procédé de compression selon une des revendications 6 à 9, dans lequel on envoie le cinquième gaz ou un gaz dérivé du cinquième gaz (13) à un appareil de séparation (A) pour s'y séparer pour produire un produit gazeux (23) ayant un poids moléculaire inférieur à 10 g/mol, voire à 7.5 g/mol ou même à 5 g/mol et une composition inférieure à 10ppm, voire à 5ppm, ou même à 1 ppm de tout constituant ayant un poids moléculaire supérieur à 50 g/mol.

11. Procédé selon la revendication 10 dans lequel l'appareil de séparation (A) produit également un gaz (25) ayant un poids moléculaire supérieur à 10 g/mol, voire à 7.5 g/mol ou même à 5 g/mol et une composition supérieure à 10ppm, voire à 5ppm, ou même à 1 ppm de tout constituant ayant un poids moléculaire supérieur à 50 g/mol et on envoie ce gaz en amont du compresseur (C2, C3) pour y être comprimé avec le premier gaz (1).

## Patentansprüche

1. Gerät zum Verdichten und Auftrennen, das einen dynamischen Verdichter mit einer ersten und einer zweiten Verdichtungsstufe (C2, C3) umfasst, um ein erstes Gas (1) zu verdichten, welches ein erstes Molekulargewicht von weniger als 10 g/mol, oder als 7,5 g/mol oder sogar als 5 g/mol hat, wobei es Folgendes aufweist:
i. eine Eintrittsöffnung für das erste Gas,
ii. Mittel zum Vermischen mindestens eines zweiten Fluids (21), welches ein zweites Molekulargewicht von mehr als 50 g/mol hat, mit dem ersten Gas, um ein drittes zu verdichtendes Gas (3) mit einem Molekulargewicht von mehr als 10 g/mol zu bilden,
iii. Mittel zum Einleiten des dritten Gases in die erste Verdichtungsstufe (C2), einen ersten Wärmetauscher (R1), um das dritte Gas nach der ersten Verdichtungsstufe abzukühlen, sodass dieses teilweise kondensiert wird, eine erste Phasentrennvorrichtung (P1), Mittel zum Einleiten des teilweise kondensierten dritten Gases in die erste Phasentrennvorrichtung, um ein viertes Gas (9) mit einem Molekulargewicht, welches niedriger als dasjenige des dritten Gases ist, und eine erste kondensierte Flüssigkeit (11) zu bilden, deren Molekulargewicht höher als dasjenige des dritten Gases ist,
iv. Mittel zum Einleiten des vierten Gases aus der ersten Phasentrennvorrichtung in die zweite Verdichtungsstufe (C3), einen zweiten Wärmetauscher (R2), welcher der zweiten Verdichtungsstufe nachgeschaltet ist, Mittel zum Einleiten des vierten verdichteten Gases in die zweite Verdichtungsstufe und zum Abkühlen desselben im zweiten Wärmetauscher, um es teilweise zu kondensieren, eine zweite Phasentrennvorrichtung (P2) sowie Mittel zum Einleiten des vierten teilweise kondensierten Gases in die zweite Phasentrennvorrichtung, um ein fünftes Gas (13), dessen Molekulargewicht niedriger als dasjenige des vierten Gases ist, und eine zweite verdichtete Flüssigkeit (15) zu produzieren, deren Molekulargewicht höher als dasjenige des vierten Gases ist, und
v. ein Auftrennungsgerät sowie Mittel zum Einleiten des fünften Gases oder eines Gasderivats des fünften Gases in das Auftrennungsgerät (A), um dort derart aufgetrennt zu werden, dass ein gasförmiges Produkt (23) mit einem Molekulargewicht von weniger als 10 g/mol, oder als 7,5 g/mol oder sogar als 5 g/mol erzeugt wird, das derart zusammengesetzt ist, dass sämtliche Bestandteile mit einem Molekulargewicht von mehr als 50 g/mol weniger als 10 ppm, oder als 5 ppm oder sogar als 1 ppm ausmachen.

2. Gerät nach Anspruch 1, wobei es Mittel zum Auffangen der ersten kondensierten Flüssigkeit (11) und/oder der zweiten kondensierten Flüssigkeit (15), wobei diese Mittel möglicherweise einen gemeinsamen Vorratsbehälter (S) umfassen, sowie Mittel zum Vermischen der ersten und/oder zweiten kondensierten Flüssigkeit mit dem ersten Gas, nachdem sie möglicherweise verdampft wurden.

3. Gerät nach Anspruch 2, das Mittel (H) zum Verdampfen zumindest einer Teilmenge der ersten und/oder zweiten kondensierten Flüssigkeit (11, 15) sowie Mittel zum Zurückführen zumindest einer Teilmenge der verdampften Teilmenge als zweites Fluid umfasst.

4. Gerät nach einem der vorhergehenden Ansprüche, wobei es Mittel (H, R1, R2) zum Verwenden einer Teilmenge der Wärme, welche durch die Verdichtung (C2, C3) entsteht, zum Verdampfen der ersten und/oder zweiten kondensierten Flüssigkeit umfassen.

5. Gerät nach einem der vorhergehenden Ansprüche, wobei die erste und/oder die zweite Phasentrennvorrichtung (P1, P2) gegenüber der Umgebung nicht thermisch isoliert ist.

6. Verfahren zum Verdichten in einem dynamischen Verdichter mit zumindest einer ersten und einer zweiten Verdichtungsstufe (C2, C3), wobei ein erstes Gas (1), das ein erstes Molekulargewicht von weniger als 10 g/mol, oder als 7,5 g/mol oder sogar als 5 g/mol hat, verdichtet wird, mindestens ein zweites Fluid (19, 21), das ein zweites Molekulargewicht von mehr als 50 g/mol hat, mit dem ersten Gas vermischt wird, um ein drittes, zu komprimierendes Gas (3) mit einem Molekulargewicht von mehr als 10 g/mol zu bilden, das dritte Gas in die erste Verdichtungsstufe (C2) eingeleitet wird, das dritte Gas in einem ersten Wärmetauscher (R1), welcher der ersten Verdichtungsstufe nachgeschaltet ist, abgekühlt wird, wobei es teilweise kondensiert wird, das dritte teilweise kondensierte Gas in eine erste Phasentrennvorrichtung (P1) eingeleitet wird, welche bei einer Temperatur von mehr als -50 °C betrieben wird, um ein viertes Gas (9), dessen Molekulargewicht niedriger als dasjenige des dritten Gases (9) ist, und eine erste kondensierte Flüssigkeit (11) zu bilden, deren Molekulargewicht höher als dasjenige des dritten Gases ist, das vierte Gas aus der ersten Phasentrennvorrichtung in die zweite Verdichtungsstufe (C3) eingeleitet wird, das vierte Gas, welches in der zweiten Verdichtungsstufe verdichtet wurde, zum Abkühlen in einen zweiten Wärmetauscher (R2) eingeleitet wird, wo es teilweise kondensiert, das vierte, teilweise kondensierte Gas in eine zweite Phasentrennvorrichtung (P2) eingeleitet wird, die bei einer Temperatur von mehr als -50 °C betrieben wird, um ein fünftes Gas (13), dessen Molekulargewicht niedriger als dasjenige des vierten Gases ist, und eine zweite kondensierte Flüssigkeit (15) zu erzeugen, deren Molekulargewicht höher als dasjenige des vierten Gases ist.

7. Verfahren nach Anspruch 6, wobei die erste kondensierte Flüssigkeit und/oder die zweite kondensierte Flüssigkeit (11, 15) aufgefangen werden, möglicherweise in einem gemeinsamen Vorratsbehälter (S), und die erste und/oder die zweite kondensierte Flüssigkeit mit dem ersten Gas (1) vermischt wird, nachdem sie möglicherweise verdampft wurden.

8. Verfahren nach Anspruch 7, wobei zumindest eine Teilmenge der ersten und/oder zweiten kondensierten Flüssigkeit (11, 15) verdampft wird und zumindest eine Teilmenge der verdampften Teilmenge (19) als zweite Flüssigkeit zurückgeführt wird.

9. Verfahren nach einem der Ansprüche 6 bis 8, wobei es sich bei dem ersten Gas um Wasserstoff handelt.

10. Verfahren zum Verdichten und Auftrennen, wobei es ein Verdichtungsverfahren nach einem der Ansprüche 6 bis 9 umfasst, in welchem das fünfte Gas oder ein Gasderivat des fünften Gases (13) in ein Auftrennungsgerät (A) eingeleitet wird, um dort derart aufgetrennt zu werden, dass ein gasförmiges Produkt (23) mit einem Molekulargewicht von weniger als 10 g/mol, oder als 7,5 g/mol oder sogar als 5 g/mol erzeugt wird, das derart zusammengesetzt ist, dass sämtliche Bestandteile mit einem Molekulargewicht von mehr als 50 g/mol weniger als 10 ppm, oder als 5 ppm oder sogar als 1 ppm ausmachen

11. Verfahren nach Anspruch 10, wobei in dem Auftrennungsgerät (A) weiterhin ein Gas (25) mit einem Molekulargewicht mehr als 10 g/mol, oder als 7,5 g/mol oder sogar als 5 g/mol erzeugt wird, das derart zusammengesetzt ist, dass sämtliche Bestandteile mit einem Molekulargewicht von mehr als 50 g/mol mehr als 10 ppm, oder als 5 ppm oder sogar als 1 ppm ausmachen, und dieses Gas vor dem Verdichter (C2, C3) eingeleitet wird, um dort mit dem ersten Gas (1) verdichtet zu werden.

## Claims

1. Compression and separation device, comprising a dynamic compressor having first and second compression stages (C2, C3) for compressing a first gas (1) having a first molecular weight less than 10 g/mol, or even less than 7.5 g/mol, or even less than 5 g/mol, comprising:
i. An inlet for the first gas,
ii. Means for mixing at least one second fluid (21) having a second molecular weight greater than 50 g/mol with the first gas to form a third gas to be compressed (3) having a molecular weight greater than 10 g/mol,
iii. Means for sending the third gas to the first compression stage (C2), a first heat exchanger (R1) for cooling the third gas downstream of the first compression stage in order to partially condense it, a first phase separator (P1), means for sending the partially condensed third gas to the first phase separator to form a fourth gas (9) having a lower molecular weight than the third gas and a first condensed liquid (11) having a higher molecular weight than the third gas,
iv. Means for sending the fourth gas from the first phase separator to the second compression stage (C3), a second heat exchanger (R2) downstream of the second compression stage, means for sending the compressed fourth gas to the second compression stage and cooling it in the second heat exchanger in order to partially condense it, a second phase separator (P2) and means for sending the partially condensed fourth gas to the second phase separator to produce a fifth gas (13) having a lower molecular weight than the fourth gas and a second condensed liquid (15) having a higher molecular weight than the fourth gas, and
v. A separation device and means for sending the fifth gas or a gas derived from the fifth gas to the separation device (A) to be separated therein to produce a gaseous product (23) having a molecular weight of less than 10 g/mol, or even less than 7.5 g/mol, or even less than 5 g/mol, and a composition of less than 10 ppm, or even less than 5 ppm, or even less than 1 ppm of any component having a molecular weight greater than 50 g/mol.

2. Device according to Claim 1, comprising means for recovering the first condensed liquid (11) and/or the second condensed liquid (15), these means optionally comprising a common reservoir (S), and means for mixing the first and/or second condensed liquid with the first gas optionally after vaporization.

3. Device according to Claim 2, comprising means (H) for at least partially vaporizing the first and/or second condensed liquid (11, 15) and means for at least partially recycling the vaporized portion as a second fluid.

4. Device according to one of the preceding claims, comprising means (H, R1, R2) for using some of the heat generated by compression (C2, C3) to vaporize the first and/or second condensed liquid.

5. Device according to one of the preceding claims, in which the first and/or second phase separator (P1, P2) is not thermally insulated from the ambient air.

6. Compression process in a dynamic compressor having at least one first and one second compression stages (C2, C3) in which a first gas (1) having a first molecular weight of less than 10 g/mol, or even less than 7.5 g/mol, or even less than 5 g/mol, is compressed, at least one second fluid (19, 21) having a second molecular weight greater than 50 g/mol is mixed with the first gas to form a third gas to be compressed (3) having a molecular weight greater than 10 g/mol, the third gas is sent to the first compression stage (C2), the third gas is cooled in a first heat exchanger (R1) downstream of the first compression stage, where it is partially condensed, the partially condensed third gas is sent to a first phase separator (P1) operating at a temperature greater than -50°C to form a fourth gas having a lower molecular weight than the third gas (9) and a first condensed liquid (11) having a higher molecular weight than the third gas, the fourth gas is sent from the first phase separator to the second compression stage (C3), the fourth gas compressed in the second compression stage is sent to cool in a second heat exchanger (R2) where it partially condenses, the partially condensed fourth gas is sent to a second phase separator (P2) operating at a temperature greater than -50°C to produce a fifth gas (13) having a lower molecular weight than the fourth gas and a second condensed liquid (15) having a higher molecular weight than the fourth gas.

7. Process according to Claim 6, in which the first condensed liquid and/or the second condensed liquid (11, 15) are recovered, optionally in a common reservoir (S), and the first and/or second condensed liquid is mixed with the first gas (1) optionally after vaporization.

8. Process according to Claim 7, in which the first and/or second condensed liquid (11, 15) is at least partially vaporized and the vaporized portion (19) is at least partially recycled as a second fluid.

9. Process according to one of Claims 6 to 8, in which the first gas is hydrogen.

10. Compression and separation process comprising a compression process according to one of Claims 6 to 9, in which the fifth gas or a gas derived from the fifth gas (13) is sent to a separation device (A) to be separated therein to produce a gaseous product (23) having a molecular weight of less than 10 g/mol, or even less than 7.5 g/mol, or even less than 5 g/mol, and a composition of less than 10 ppm, or even less than 5 ppm, or even less than 1 ppm of any component having a molecular weight greater than 50 g/mol.

11. Process according to Claim 10, in which the separation device (A) also produces a gas (25) having a molecular weight greater than 10 g/mol, or even greater than 7.5 g/mol, or even greater than 5 g/mol, and a composition of more than 10 ppm, or even more than 5 ppm, or even more than 1 ppm of any component having a molecular weight greater than 50 g/mol, and this gas is sent upstream of the compressor (C2, C3) to be compressed therein with the first gas (1).
